(19) Europäisches Patentamt / European Patent Office / Office européen des brevets

(11) **EP 2 597 120 B1**

(12) **EUROPEAN PATENT SPECIFICATION**

(45) Date of publication and mention of the grant of the patent: **09.12.2020 Bulletin 2020/50**

(21) Application number: **11809530.6**

(22) Date of filing: **23.06.2011**

(51) Int Cl.:
***C08L 69/00*** *(2006.01)* ***C08K 5/523*** *(2006.01)*
***C08K 7/06*** *(2006.01)* ***C08K 7/20*** *(2006.01)*
*C08L 25/04 (2006.01)* *C08K 7/02 (2006.01)*
*C08L 67/02 (2006.01)*

(86) International application number: **PCT/JP2011/064362**

(87) International publication number: **WO 2012/011356 (26.01.2012 Gazette 2012/04)**

(54) **HIGHLY-THERMALLY-CONDUCTIVE POLYCARBONATE RESIN COMPOSITION AND MOLDED BODY**

POLYCARBONATHARZZUSAMMENSETZUNG VON HOHER WÄRMELEITFÄHIGKEIT UND FORMARTIKEL DARAUS

COMPOSITION DE RÉSINE POLYCARBONATE FORTEMENT THERMOCONDUCTRICE ET CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2010 JP 2010174978**
**21.07.2010 JP 2010164082**

(43) Date of publication of application: **29.05.2013 Bulletin 2013/22**

(73) Proprietor: **Mitsubishi Engineering-Plastics Corporation**
**Tokyo 105-0021 (JP)**

(72) Inventors:
- **KIKUCHI, Tatsuya**
  **Hiratsuka-shi**
  **Kanagawa 254-0016 (JP)**
- **NAGASHIMA, Hiromitsu**
  **Hiratsuka-shi**
  **Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**JP-A- 7 324 143**
**JP-A- 11 049 937**
**JP-A- 2005 320 515**
**JP-A- 2007 031 611**
**JP-A- 2007 099 799**
**JP-A- 2011 016 936**
**US-A- 4 243 575**

- **J L Wang ET AL: "Thermal conductivity measurement of an individual fibre using a T type probe method", Journal of Physics D: Applied Physics, vol. 42, no. 10, 27 April 2009 (2009-04-27), page 105502, XP055565188, GB ISSN: 0022-3727, DOI: 10.1088/0022-3727/42/10/105502**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 597 120 B1

## Description

### Field of Invention

The present invention relates to a high-thermal-conductivity polycarbonate resin composition and a formed product thereof. More particularly, the present invention relates to a polycarbonate resin composition having markedly excellent thermal conductivity because of the inclusion of particular carbon fiber and glass beads, a polycarbonate resin composition having excellent thermal conductivity and excellent insulating properties because of the additional inclusion of glass flakes, and a high-thermal-conductivity polycarbonate resin formed product manufactured by shaping the high-thermal-conductivity polycarbonate resin composition.

### Background of Invention

With recent advances in hardware, such as a reduction in size and weight or an improvement in precision of OA equipment and electronic devices, the proliferation of the Internet, and rapid IT revolution, the carrying of this OA equipment and these electronic devices, that is, portable terminals (mobiles), is rapidly becoming widespread. Representative examples of the portable terminals include notebook computers, electronic notebooks, mobile phones, and PDAs. There will be increasing demands for more diversification, higher functionality, and higher performance in the future.
Thermoplastic resins have been widely used in housings for electrical, electronic, and OA equipment components other than the portable terminals, mechanical components, and vehicle components, as well as housings for the portable terminals. With improvements in the diversification, functionality, and performance and reduction in the size and weight of the equipment and components, materials having high strength, high rigidity, high impact resistance, high heat resistance, and high flowability are being needed as the resin materials for housings. Furthermore, in response to the fire accident of a notebook computer due to a malfunction of a battery, there is a strong demand for flame retardancy.
In these fields, most equipment includes a component that generates heat. With a recent increase in power consumption associated with improvement in the performance of apparatuses and components, the amounts of heat generated by the components are increasing. Thus, local high temperature may cause a trouble, such as malfunction. Under the present conditions, generated heat is dissipated by using metallic materials in housings, chassis, and heat-radiating plates. However, there is a growing demand for inexpensive resin materials that have high thermal conductivity and can replace the metal components.
As a method for imparting thermal conductivity to resin materials, many methods have been reported in which various thermal conductive fillers are mixed with resin components. In one method, graphite is blended as a thermal conductive filler.
For example, Patent Document 1 describes a thermal conductive polycarbonate resin composition that includes 100 parts by weight of an (A) polycarbonate resin, 5 parts by weight or more and less than 40 parts by weight of (B) graphitized carbon fiber having longitudinal thermal conductivity of 100 W/m K or more and an average fiber diameter in the range of 5 to 20 μm, and 5 parts by weight or more and 100 parts by weight or less of a (C) thermal conductive powder (other than boron nitride) having a thermal conductivity of 10 W/m K or more and an average particle size in the range of 1 to 500 μm.
Patent Document 2 describes a filled polycarbonate composition comprising an admixture of a high molecular weight aromatic polycarbonate resin and a particulate filler in an amount of about 2 to 40% by weight of the total weight of said polycarbonate composition, said particulate filler consisting essentially of an amorphous alumino silicate glass recovered from flyash with the magnatile portion thereof. The composition can also contain other ingredients such as impact modifiers, glass fillers and the like.

Patent Document 1: Japanese Patent Publication 2005-320515
Patent Document 2: US 4 243 575 A

### Summary of Invention

#### Problem to be solved

In recent years, with an increase in the amount of heat generated by electrical, electronic, and OA equipment components associated with an increase in capacity and power, with an increase in the amount of heat per volume due to reduction in the sizes of the components, and with an increase in the required thermal conductivity per volume of a constituent material due to a reduction in the thickness of the housing for the equipment, there has been a demand for a constituent material having still higher thermal conductivity. There is an additional demand for further improvement in flame resistance.

In the thermal conductive polycarbonate resin composition described in Patent Document 1, high-thermal-conductivity graphitized carbon fiber can be blended with a thermal conductive powder to improve the effect of providing thermal conductivity by the graphitized carbon fiber, thus producing a good thermal conductive polycarbonate resin composition. However, it is desirable that the components to be blended and the composition design be further improved.

In view of the current situations described above, it is an object of the present invention to provide a high-thermal-conductivity polycarbonate resin composition that has further improved thermal conductivity and even insulating properties and flame resistance, and a formed product thereof.

Solution to Problem

As a result of extensive studies to solve the problems described above, the present inventors found that the thermal conductive powder blended in Patent Document 1 can be replaced by glass beads having a predetermined size and shape to further improve the effect of providing thermal conductivity due to the blend of graphitized carbon fiber although the glass beads themselves are not thermal conductive materials, that the blend of glass flakes having a particular size and shape can further improve the effect of providing thermal conductivity due to the blend of graphitized carbon fiber and improve insulating properties although the glass flakes themselves are also not thermal conductive materials, and that use of a particular phosphorus flame retardant, silicone flame retardant, or metal salt flame retardant can improve flame resistance and thermal conductivity.

Advantageous Effects of Invention

In a high-thermal-conductivity polycarbonate resin composition according to the present invention, the inclusion of spherical glass beads having a particular average particle size together with high-thermal-conductivity graphitized carbon fiber having a particular average fiber diameter results in very high thermal conductivity.

The graphitized carbon fiber used in the present invention is a component that can impart high thermal conductivity to the composition. The addition of glass beads to the graphitized carbon fiber localizes the graphitized carbon fiber in the composition because of the exclusion effect of the glass beads. This allows the formation of a graphitized carbon fiber network having high thermal conductivity, thus achieving excellent thermal conductivity.

Furthermore, glass beads having high sphericity do not increase the viscosity of the composition, have a small surface area, and have a curved surface without a corner. In addition, glass itself does not have so high hardness. Thus, the glass beads rarely scratch the graphitized carbon fiber while the composition is kneaded. This prevents the graphitized carbon fiber to be broken and shortened while the composition is kneaded, facilitating the formation of the graphitized carbon fiber network and contributing to high thermal conductivity.

Although alumina or magnesia particles have thermal conductivity and can increase thermal conductivity, these particles have high hardness and therefore break carbon fibers by a collision between the particles and the carbon fibers, possibly making the formation of a carbon fiber network difficult. Furthermore, manufacturing facilities (screws and metal molds) may deteriorate at an early stage because of abrasion by the hard particles. Glass beads do not cause such a problem.

A high-thermal-conductivity polycarbonate resin composition according to the present invention may further contain 5 parts by mass or more and 200 parts by mass or less of (D) glass flakes having an average particle size in the range of 10 to 4000 $\mu$m and an aspect ratio in the range of 2 to 200 per 100 parts by mass of the (A) resin component. The inclusion of spherical glass beads having a particular average particle size and glass flakes having a particular average particle size and a particular aspect ratio together with high-thermal-conductivity graphitized carbon fiber having a particular average fiber diameter results in high insulating properties while retaining high thermal conductivity.

In a high-thermal-conductivity polycarbonate resin composition according to the present invention, the (A) resin component is preferably a polycarbonate resin alone, an alloy of a polycarbonate resin and a thermoplastic polyester resin, or an alloy of a polycarbonate resin and a styrene resin (Claims 2 and 3).

A high-thermal-conductivity polycarbonate resin composition according to the present invention preferably contains 15 parts by mass or more and 35 parts by mass or less of (B) graphitized carbon fiber per 100 parts by mass of the (A) resin component (Claim 4).

In a high-thermal-conductivity polycarbonate resin composition according to the present invention, when the amount of (B) graphitized carbon fiber relative to the amount of (C) glass beads ((B)/(C) (mass ratio)) is 0.1 or more and less than 1, this results in a suitable balance between forming processability and thermal conductivity. The amount of (B) graphitized carbon fiber relative to the amount of (C) glass beads ((B)/(C) (mass ratio)) is 0.1 or more and less than 1. (Claim 1) The amount of (D) glass flakes relative to the amount of (C) glass beads ((D)/(C) (mass ratio)) is preferably 0.1 or more and less than 1.

A high-thermal-conductivity polycarbonate resin composition according to the present invention preferably further contains a flame retardant. The flame retardant may be 5 to 30 parts by mass of an (E) phosphorus flame retardant

per 100 parts by mass of the (A) resin component. The (E) phosphorus flame retardant is preferably a phosphate compound. (Claims 5 and 6)

A high-thermal-conductivity polycarbonate resin composition according to the present invention may contain 0.1 to 10 parts by mass of an (F) silicone flame retardant as a flame retardant per 100 parts by mass of the (A) resin component (Claim 7).

A high-thermal-conductivity polycarbonate resin composition according to the present invention may contain 0.02 to 0.3 parts by mass of a (G) metal salt flame retardant as a flame retardant per 100 parts by mass of the (A) resin component (Claim 8).

A high-thermal-conductivity polycarbonate resin composition according to the present invention preferably further contains 0.01 to 1 part by weight of an (H) fluoropolymer per 100 parts by mass of the (A) resin component (Claim 9).

A high-thermal-conductivity polycarbonate resin composition according to the present invention preferably further contains 0.001 to 2 parts by mass of an (I) mold-release agent per 100 parts by mass of the (A) resin component (Claim 10).

A high-thermal-conductivity polycarbonate resin formed product according to the present invention is manufactured by shaping a high-thermal-conductivity polycarbonate resin composition according to the present invention. The (B) graphitized carbon fiber is oriented in the forming direction (a direction substantially parallel to the resin flow direction) by shear force applied to the polycarbonate resin composition in the forming process while being excluded by the (C) glass beads, thus forming a satisfactory network and achieving very high thermal conductivity. Furthermore, the (D) glass flakes are oriented under shear stress generated in a metal mold during injection molding such that the glass flakes penetrate into gaps among the carbon fibers to prevent the formation of a conductive path. This ensures the insulating properties of the composition even using electroconductive carbon fiber.

Description of Embodiments

Embodiments of a high-thermal-conductivity polycarbonate resin composition and a formed product thereof according to the present invention will be described in detail below.

[High-thermal-conductivity polycarbonate Resin Composition]

A high-thermal-conductivity polycarbonate resin composition according to the present invention contains an (A) resin component mainly composed of a polycarbonate resin, particular (B) graphitized carbon fiber, and particular (C) glass beads. The composition may further contain (D) glass flakes. Preferably, the composition further contains a flame retardant, such as an (E) phosphorus flame retardant, an (F) silicone flame retardant, or a (G) metal salt flame retardant, or an (H) fluoropolymer. If necessary, the composition further contains various additive agents, such as an (I) mold-release agent.

A high-thermal-conductivity polycarbonate resin composition according to the present invention, which contains three components: (A) resin component, (B) graphized carbon fiber, and (C) glass beads, has very high thermal conductivity. This is because, in the injection molding of a resin composition containing the three components, the (B) graphitized carbon fiber is oriented in the forming direction (a direction substantially parallel to the resin flow direction) by shear force applied to the polycarbonate resin composition in the forming process while being excluded by the (C) glass beads, thus forming a satisfactory network.

When a high-thermal-conductivity polycarbonate resin composition according to the present invention contains (D) glass flakes as well as the three components (A), (B), and (C), the addition of the (D) glass flakes can improve insulating properties while maintaining high thermal conductivity. The reason for the improved insulating properties is that glass flakes, which serve as an insulator, are oriented under shear stress generated in a metal mold during injection molding such that the glass flakes penetrate into gaps among the carbon fibers to prevent the formation of a conductive path. This ensures the insulating properties of the composition even using electroconductive carbon fiber.

{(A) Resin Component}

A resin component for use in a high-thermal-conductivity polycarbonate resin composition according to the present invention is mainly composed of a polycarbonate resin. The term "mainly composed of", as used herein, means that the component accounts for 50% by mass or more of the resin component.

The (A) resin component according to the present invention is a polycarbonate resin alone (the phrase "polycarbonate resin alone" is not limited to an aspect involving only one type of polycarbonate resin but is intended to include an aspect involving a plurality of polycarbonate resins, for example, having different monomer compositions or molecular weights) or an alloy (mixture) of a polycarbonate resin and another thermoplastic resin. The alloy contains 100 parts by mass or less, preferably 70 parts by mass or less, of another thermoplastic resin per 100 parts by mass of a polycarbonate

resin. That another thermoplastic resin may be one or two or more thermoplastic resins, for example, polyamide resins, such as polyamide-6 and polyamide-6,6; thermoplastic polyester resins; and styrene resins, such as polystyrene resins, high-impact polystyrene resins (HIPS), acrylonitrile-styrene copolymers (AS resins), acrylonitrile-butadiene-styrene copolymers (ABS resins), acrylonitrile-styrene-acrylic rubber copolymers (ASA resins), and acrylonitrile-ethylene propylene rubber-styrene copolymers (AES resins). Among these, that another thermoplastic resin is preferably a thermoplastic polyester resin or a styrene resin.

The thermoplastic polyester resin is more preferably a poly(butylene terephthalate) resin or a poly(ethylene terephthalate) resin, still more preferably a polycarbonate resin alloy that contains 10 to 70 parts by mass of a poly(butylene terephthalate) resin or a poly(ethylene terephthalate) resin per 100 parts by mass of a polycarbonate resin, particularly preferably a polycarbonate resin alloy that contains 20 to 50 parts by mass of a poly(butylene terephthalate) resin or a poly(ethylene terephthalate) resin per 100 parts by mass of a polycarbonate resin.

The styrene resin is preferably an ABS resin, more preferably a polycarbonate resin alloy that contains 10 to 70 parts by mass of an ABS resin per 100 parts by mass of a polycarbonate resin, particularly preferably a polycarbonate resin alloy that contains 20 to 50 parts by mass of an ABS resin per 100 parts by mass of a polycarbonate resin.

<Polycarbonate Resin>

The polycarbonate resin may be an aromatic polycarbonate resin, an aliphatic polycarbonate resin, or an aromatic-aliphatic polycarbonate resin. Among these, an aromatic polycarbonate resin is preferred. These polycarbonate resins may be used alone or in combination.

The aromatic polycarbonate resin may be a thermoplastic aromatic polycarbonate polymer or copolymer produced by a reaction between an aromatic dihydroxy compound and phosgene or a carbonate diester. The aromatic dihydroxy compound used in the reaction may be 2,2-bis(4-hydroxyphenyl)propane (= bisphenol A), tetramethylbisphenol A, bis(4-hydroxyphenyl)-p-diisopropylbenzene, hydroquinone, resorcinol, or 4,4-dihydroxybiphenyl, preferably bisphenol A. In order to further improve flame resistance, the aromatic dihydroxy compound coupled with one or more sulfonic acid tetraalkyl phosphonium or a polymer or oligomer having a siloxane structure and a phenolic OH group at both ends may be used.

An aromatic polycarbonate resin for use in the present invention is preferably a polycarbonate resin derived from 2,2-bis(4-hydroxyphenyl)propane or a polycarbonate copolymer derived from 2,2-bis(4-hydroxyphenyl)propane and another aromatic dihydroxy compound.

The molecular weight of the polycarbonate resin is generally in the range of 14,000 to 30,000, preferably 15,000 to 28,000, more preferably 16,000 to 26,000, as a viscosity-average molecular weight converted from a solution viscosity measured at a temperature of 25°C using methylene chloride as a solvent. A viscosity-average molecular weight of less than 14,000 unfavorably results in insufficient mechanical strength. A viscosity-average molecular weight of more than 30,000 unfavorably results in poor formability.

A method for manufacturing such an aromatic polycarbonate resin may be, but not limited to, a phosgene method (an interfacial polymerization method) or a melting method (a transesterification method). An aromatic polycarbonate resin manufactured by a melting method can be used in which the number of terminal OH groups is controlled.

The aromatic polycarbonate resin may be not only a virgin raw material but also a recycled aromatic polycarbonate resin made from used products, that is, a material recycled aromatic polycarbonate resin. Preferred examples of the used products include optical recording media, such as optical disks, light guide plates, vehicle transparent components, such as automobile window glasses, automobile headlight lenses, and windshields, containers, such as water bottles, spectacle lenses, and architectural members, such as sound barriers, glass windows, and corrugated sheets. The recycled aromatic polycarbonate resin may be a ground product manufactured from nonconforming products, sprues, or runners, or pellets manufactured by melting them.

<Thermoplastic Polyester Resin>

A poly(ethylene terephthalate) resin (PET) that is another preferred thermoplastic polyester resin for use in the present invention may be manufactured by a transesterification reaction between dimethyl terephthalate and ethylene glycol or a direct esterification reaction between terephthalic acid and ethylene glycol.

A poly(butylene terephthalate) resin (PBT) for use in the present invention may be manufactured by a DMT method involving a transesterification reaction between dimethyl terephthalate and 1,4-butanediol or a direct polymerization method between terephthalic acid and 1,4-butanediol.

In both cases of PET and PBT, together with terephthalic acid or a dialkyl ester thereof, a dibasic acid, a tribasic acid, or a dialkyl ester thereof, such as phthalic acid, isophthalic acid, naphthalenedicarboxylic acid, diphenyldicarboxylic acid, adipic acid, sebacic acid, trimellitic acid, or a dialkyl ester thereof, may be used in the polycondensation reaction. The amounts of those used are preferably 40 parts by weight or less per 100 parts by weight of terephthalic acid or a

dialkyl ester thereof.

Likewise, another aliphatic glycol, for example, ethylene glycol, propylene glycol, 1,4-butanediol, or hexamethylene glycol, or another diol or polyhydric alcohol other than the aliphatic glycols, for example, cyclohexanediol, cyclohexanedimethanol, xylene glycol, 2,2-bis(4-hydroxyphenyl)propane, glycerin, or pentaerythritol may be used in combination with ethylene glycol or 1,4-butanediol in the polycondensation reaction. The amounts of diols or polyhydric alcohols used are preferably 40 parts by weight or less per 100 parts by weight of aliphatic glycol.

The molecular weight of the polyester resin is preferably in the range of 0.5 to 1.8, more preferably 0.7 to 1.5, as an intrinsic viscosity measured at 30°C in a mixed solvent of phenol and tetrachloroethane (weight ratio = 50/50).

The polyester resin may be not only a virgin raw material but also a recycled PET or PBT made from used products, that is, a material recycled PET or PBT. Typical examples of the used products include containers, films, sheets, and fibers. Containers, such as PET bottles, are more suitable. The recycled PET and PBT may be a ground product manufactured from nonconforming products, sprues, or runners, or pellets manufactured by melting them.

<Styrene Resin>

A preferred thermoplastic resin for use in the present invention may be a styrene resin. Examples of the styrene resin include acrylonitrile-styrene copolymers, acrylonitrile-styrene-butadiene copolymers, acrylonitrile-ethylene propylene rubber-styrene copolymers, and acrylonitrile-styrene-acrylic rubber copolymers. A polymerization method for the styrene resin may be a bulk polymerization method or an emulsion polymerization method. Styrene resins manufactured by a bulk polymerization method are desirable.

The styrene resin for use in the present invention may be not only a virgin raw material but also a recycled styrene resin made from used products, that is, a material recycled styrene resin. The used products are typically housings. The recycled styrene resin may be a ground product manufactured from nonconforming products, sprues, or runners, or pellets manufactured by melting them.

{(B) Graphitized Carbon Fiber}

The (B) graphitized carbon fiber for use in the present invention is carbon fiber that has a longitudinal thermal conductivity of 100 W/m·K or more, preferably 400 W/m·K, and an average fiber diameter in the range of 5 to 20 μm.

When the (B) graphitized carbon fiber has a thermal conductivity of less than the lower limit, high thermal conductivity cannot be achieved with a reduced amount of (B) graphitized carbon fiber. An increase in the amount of (B) graphitized carbon fiber so as to increase thermal conductivity causes a problem, such as poor formability.

The (B) graphitized carbon fiber is a short carbon fiber aggregate manufactured by aggregating 2- to 20-mm short carbon fibers (chopped strands) at a bulk density in the range of 450 to 800 g/l and then graphitizing the aggregate, as described in Japanese Unexamined Patent Application Publication No. 2000-143826. The short carbon fiber aggregate is manufactured by aggregating carbon fibers with a sizing agent, cutting the aggregate to a predetermined length, and graphitizing the aggregate, while the sizing agent content is 0.1% by mass or less. The conditions for graphitization involves a method for heating the aggregate in an inert gas atmosphere at a temperature in the range of 2800°C to 3300°C.

When the (B) graphitized carbon fiber has an average fiber diameter of less than 5 μm, the mixing of the (B) graphitized carbon fiber and a resin component tends to cause a problem, such as reduced thermal conductivity or increased warping of a formed product. When the (B) graphitized carbon fiber has an average fiber diameter of more than 20 μm, this results in reduced dimensional stability and poor appearance.

Thus, the (B) graphitized carbon fiber has an average fiber diameter in the range of 5 to 20 μm, preferably 7 to 15 μm.

Use of long (B) graphitized carbon fiber is preferred because this results in the formation of a satisfactory carbon fiber network in the composition and high thermal conductivity and prevents the warping of a formed product. However, use of excessively long fiber may impair workability. Thus, the (B) graphitized carbon fiber has a fiber length in the range of 2 to 20 mm.

In the present invention, the average fiber diameter and the fiber length of the (B) graphitized carbon fiber are values before the (B) graphitized carbon fiber is mixed with a resin component and are generally values listed in a product catalog.

An excessively small amount of (B) graphitized carbon fiber cannot achieve sufficient thermal conductivity. An excessively large amount of (B) graphitized carbon fiber results in reduced forming processability or dimensional stability and increased warping of a formed product. Thus, the amount of (B) graphitized carbon fiber is in the range of 5 to 100 parts by mass, preferably 10 to 40 parts by mass, more preferably 15 to 35 parts by mass, per 100 parts by mass of the (A) resin component.

{(C) Glass Beads}

In the present invention, a network of the (B) graphitized carbon fiber having high thermal conductivity is formed in the composition, and (C) glass beads having an average particle size in the range of 1 to 100 μm and a sphericity in the range of 1 to 2 are added to further improve the thermal conductivity of the composition. The (C) glass beads themselves are not thermal conductive materials and generally have a thermal conductivity of 1.0 W/m K or less.

When the (C) glass beads have an average particle size of less than 1 μm, this results in an insufficient effect of excluding the (B) graphitized carbon fiber, an insufficient effect of improving thermal conductivity, poor handleability, such as scattering during a blending process, and poor dispersibility in the composition. When the (C) glass beads have an average particle size of more than 100 μm, this results in poor forming processability. Thus, the (C) glass beads have an average particle size in the range of 1 to 100 μm, preferably 1 to 80 μm.

When the (C) glass beads have a sphericity of more than 2, the (C) glass beads tend to scratch the (B) graphitized carbon fiber while the composition is kneaded. Thus, the advantages of the present invention due to the use of spherical glass beads cannot be achieved. The (C) glass beads are preferably closer to spheres and preferably have a sphericity in the range of 1 to 1.7, more preferably 1 to 1.5, still more preferably 1 to 1.2.

The average particle size of the (C) glass beads is a mean value obtained by measuring the maximum particle sizes of 100 samples in scanning electron microscope (SEM) observation. The maximum particle size refers to a diameter at a portion having the largest distance between two parallel plates (a spacing between the plates) when the glass beads are placed between the two parallel plates.

The sphericity of glass beads is determined by calculating the ratio of the average particle size (average maximum particle size)/the average minimum particle size, wherein the average minimum particle size is a mean value obtained by measuring the minimum particle sizes of 100 samples in scanning electron microscope (SEM) observation. The minimum particle size refers to a diameter at a portion having the smallest interval between two parallel plates (the length of the interval between the plates) when the glass beads are placed between the two parallel plates.

The average particle size and the sphericity can also be measured with a particle size distribution analyzer.

The (C) glass beads may be surface-treated with a surface-treating agent, such as a coupling agent. The surface treatment increases adhesion to the (A) resin component and improves the mechanical characteristics of the high-thermal-conductivity polycarbonate resin composition.

Examples of the coupling agent for use in the surface treatment of the (C) glass beads include silane, titanate, aluminum, chromium, zirconium, and borane coupling agents. Among these, silane coupling agents are suitable.

Examples of the silane coupling agents include γ-glycidoxypropyltrimethoxysilane, β-(3,4-epoxycyclohexyl)ethyltrimethoxysilane, vinyltriethoxysilane, vinyl-tris(2-methoxyethoxy)silane, γ-methacryloxypropyltrimethoxysilane, γ-aminopropyltrimethoxysilane, N-β-(aminoethyl)-γ-aminopropyltrimethoxysilane, N-β-(aminoethyl)-γ-aminopropylmethyldimethoxysilane, γ-mercaptopropyltrimethoxysilane, and γ-chloropropyltrimethoxysilane. Among these, one or more coupling agents selected from γ-aminopropyltrimethoxysilane, N-β-(aminoethyl)-γ-aminopropylmethyldimethoxysilane, and N-β-(aminoethyl)-γ-aminopropyltrimethoxysilane are particularly suitably used alone or in combination.

A method for treating the (C) glass beads with the coupling agent may be, but not limited to, a conventionally used method, for example, dip coating, roll coating, blow coating, flow coating, and spray coating.

In a high-thermal-conductivity polycarbonate resin composition according to the present invention, the amount of (C) glass beads is in the range of 5 to 200 parts by mass, preferably 10 to 150 parts by mass, more preferably 20 to 100 parts by mass, per 100 parts by mass of the (A) resin component. When the amount of (C) glass beads is smaller than the lower limit, the addition of the (C) glass beads cannot sufficiently improve thermal conductivity. When the amount of (C) glass beads is larger than the upper limit, a composition cannot be obtained, and shape processing may not be performed.

The amount of (B) graphitized carbon fiber relative to the amount of (C) glass beads ((B)/(C) (mass ratio)) in a high-thermal-conductivity polycarbonate resin composition according to the present invention is 0.1 or more and less than 1, preferably 0.2 or more and less than 0.9, particularly preferably 0.3 or more and less than 0.8.

(B)/(C) (mass ratio) of less than 0.1 results in no formation of a carbon fiber network because of an insufficient amount of carbon fiber. (B)/(C) (mass ratio) of 1 or more results in an insufficient exclusion effect of glass beads and consequently an insufficient effect of improving thermal conductivity.

The ratio of the average fiber diameter of the (B) graphitized carbon fiber to the average particle size of the (C) glass beads ((B)/(C) (average diameter ratio)) is preferably in the range of 0.05 to 20, more preferably 0.1 to 15, particularly preferably 0.2 to 10.

(B)/(C) (average diameter ratio) of less than 0.05 results in an insufficient exclusion effect of the glass beads. (B)/(C) (average diameter ratio) of 20 or more results in the interference in the orientation of the carbon fibers by the glass beads, forming no network and achieving an insufficient effect of improving thermal conductivity.

{Other Components}

In addition to the (A) resin component, the (B) graphitized carbon fiber, and the (C) glass beads, a high-thermal-conductivity polycarbonate resin composition according to the present invention may contain the following components without compromising the object of the present invention.

<(D) Glass Flakes>

A high-thermal-conductivity polycarbonate resin composition according to the present invention may contain (D) glass flakes having an average particle size in the range of 10 to 4000 μm and an aspect ratio in the range of 2 to 200. A predetermined amount of such glass flakes can impart insulating properties to the resin composition while maintaining high thermal conductivity.

The (D) glass flakes for use in the present invention are plate-like amorphous glasses having a thickness in the range of 3 to 7 μm and an average particle size in the range of 10 to 4000 μm. The characteristics of inorganic glass and the characteristics resulting from their shape produce distinctive effects. Glass to be used includes C glass and E glass. E glass contains a less amount of $Na_2O$ or $K_2O$ than C glass. Thus, glass flakes made of E glass are preferably used.

The (D) glass flakes have an average particle size in the range of 10 to 4000 μm, preferably 100 to 2000 μm, more preferably 300 to 1000 μm. An average particle size of less than 10 μm unfavorably results in an insufficient effect of improving insulating properties by the addition of the (D) glass flakes. The (D) glass flakes having an average particle size of more than 4000 μm unfavorably tends to scratch the (B) graphitized carbon fiber while the composition is kneaded.

The (D) glass flakes have an aspect ratio (average particle size/average thickness) in the range of 2 to 200, preferably 10 to 180, particularly preferably 50 to 150. An aspect ratio of less than 2 results in an insufficient effect of improving insulating properties by the addition of the (D) glass flakes. The (D) glass flakes having an aspect ratio of more than 200 unfavorably tends to scratch the (B) graphitized carbon fiber in kneading the composition.

A representative glass flake may be a commercial product REFG-101 manufactured by Nippon Electric Glass Co., Ltd., which has an average particle size of 600 μm and an aspect ratio of 120.

An increase in the amount of glass flakes having a larger average particle size than the other additive agents may result in poor appearance. Thus, the amount of glass flakes must be controlled.

In a high-thermal-conductivity polycarbonate resin composition according to the present invention, the amount of (D) glass flakes is in the range of 5 to 200 parts by mass, preferably 10 to 150 parts by mass, more preferably 20 to 100 parts by mass, per 100 parts by mass of the (A) resin component. When the amount of (D) glass flakes is smaller than the lower limit, the addition of the (D) glass flakes cannot sufficiently improve insulating properties. When the amount of (D) glass flakes is larger than the upper limit, a composition cannot be obtained, and shape processing may not be performed.

When a high-thermal-conductivity polycarbonate resin composition according to the present invention contains the (C) glass beads and the (D) glass flakes, an excessively large amount of (C) glass beads and (D) glass flakes in total makes the preparation of a composition impossible and shape processing difficult. Thus, the total amount of (C) glass beads and (D) glass flakes is preferably 200 parts by mass or less, for example, 10 to 150 parts by mass, per 100 parts by mass of the (A) resin component.

The amount of (D) glass flakes relative to the amount of (C) glass beads ((D)/(C) (mass ratio)) in a high-thermal-conductivity polycarbonate resin composition according to the present invention is preferably 0.1 or more and less than 1, more preferably 0.2 or more and 0.8 or less, particularly preferably 0.2 or more and 0.6 or less. (D)/(C) (mass ratio) of less than 0.1 results in poor insulating properties of the composition. At (D)/(C) (mass ratio) of 1 or more, the glass flakes prevents the formation of a carbon fiber network and reduces thermal conductivity.

<Flame Retardant>

A high-thermal-conductivity polycarbonate resin composition according to the present invention may contain a flame retardant to have flame resistance.

Housings for electrical and electronic devices and other applications often require flame resistance. Thus, the high-thermal-conductivity polycarbonate resin composition preferably contains a flame retardant.

Any flame retardant that can improve the flame resistance of the composition may be used. Examples of the flame retardant include halogen flame retardants, such as halogenated bisphenol A polycarbonate, brominated bisphenol epoxy resin, brominated bisphenol phenoxy resin, and brominated polystyrene, phosphate flame retardants, metal salt flame retardants, such as organic sulfonic acid metal salt flame retardants, and silicone flame retardants.

These may be used alone or in combination at any ratio.

The flame retardant is preferably an (E) phosphorus flame retardant, an (F) silicone flame retardant, or a (G) metal salt flame retardant because of its high flame retardant effect and little likelihood of causing metal mold corrosion.

In particular, among the (E) phosphorus flame retardants, a phosphate compound is preferred because of its effect of improving flowability.
Two or more of the (E) phosphorus flame retardants, the (F) silicone flame retardants, and the (G) metal salt flame retardants may be used in combination.

<(E) Phosphorus Flame Retardant>

The (E) phosphorus flame retardant is preferably a phosphoric ester compound (phosphoric ester flame retardant) having the general formula (1).

[Chem. 1]

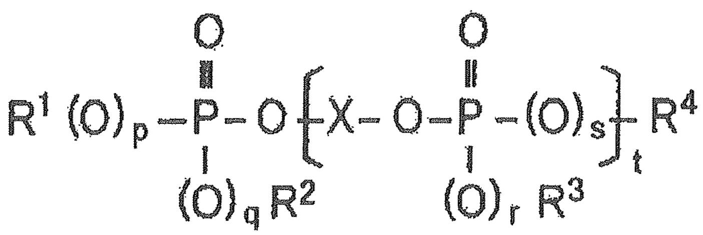

(1)

wherein $R^1$, $R^2$, $R^3$, and $R^4$ independently denote an alkyl group having 1 to 6 carbon atoms or an aryl group having 6 to 20 carbon atoms optionally substituted with an alkyl group, p, q, r, and s independently denote 0 or 1, t denotes an integer in the range of 1 to 5, and X denotes an arylene group.
In the general formula (1), the aryl group of $R^1$ to $R^4$ may be a phenyl group or a naphthyl group. The arylene group of X may be a phenylene group or a naphthylene group.
When t is 0, the compound having the general formula (1) is phosphoric ester. When t is larger than 0, the compound having the general formula (1) is a condensed phosphoric ester (including a mixture thereof). For the purpose of the present invention, a condensed phosphoric ester is suitably used.
Specific examples of the phosphoric ester flame retardant having the general formula (1) include trimethyl phosphate, triethyl phosphate, tributyl phosphate, trioctyl phosphate, tributoxyethyl phosphate, triphenyl phosphate, tricresyl phosphate, tricresylphenyl phosphate, octyldiphenyl phosphate, diisopropylphenyl phosphate, tris(chloroethyl) phosphate, tris(dichloropropyl) phosphate, tris(chloropropyl) phosphate, bis(2,3-dibromopropyl) phosphate, bis(2,3-dibromopropyl)-2,3-dichlorophosphate, bis(chloropropyl)monooctyl phosphate, bisphenol A tetraphenyl phosphate, bisphenol A tetracresyl diphosphate, bisphenol A tetraxylyl diphosphate, hydroquinone tetraphenyl diphosphate, hydroquinone tetracresyl phosphate, and hydroquinone tetraxylyl diphosphate. Among these, triphenyl phosphate, bisphenol A tetraphenyl phosphate, resorcinol tetraphenyl phosphate, and resorcinol tetra-2,6-xylenol phosphate are preferred.
These phosphoric ester flame retardants are preferred because they can improve the flame resistance of the composition, reduce the viscosity of the composition, and prevent the (B) graphitized carbon fiber from being crushed in the kneading process in the preparation of the resin composition to lose the effect of providing thermal conductivity intrinsically possessed by the (B) graphitized carbon fiber.
With a decrease in viscosity by the addition of a phosphoric ester flame retardant, a high-thermal-conductivity polycarbonate resin composition according to the present invention preferably has a flowability indicator MVR value in the range of 5.0 to 30.0 $cm^3$/10 min, particularly 5.0 to 25.0 $cm^3$/10 min, as measured in examples described below.
An excessively large MVR value may result in reduced impact resistance. An excessively small MVR value may result in insufficient metal mold filling, and a product cannot be manufactured.
The amount of (E) phosphorus flame retardant can be determined for each case. An excessively small amount of (E) phosphorus flame retardant may result in an insufficient flame retardant effect. On the other hand, an excessively large amount of (E) phosphorus flame retardant may result in reduced heat resistance or mechanical properties. Thus, the amount of (E) phosphorus flame retardant in the polycarbonate resin composition is generally 5 to 30 parts by mass, preferably 5 to 20 parts by mass, per 100 parts by mass of the (A) resin component.

<(F) Silicone Flame Retardant>

The (F) silicone flame retardant in the present invention is preferably a silicone powder. The silicone powder preferably contains a polyorganosiloxane polymer (f2) supported on the surface of silica (f1).
The silica (f1) functions to impart significant flame resistance to the polycarbonate resin composition by the

synergistic effect with an (H) fluoropolymer, such as polytetrafluoroethylene, described below. The silica (f1) may be pulverized silica (silica powder) obtained from fume, precipitation, or mining. Fumed and precipitated silica preferably have a surface area in the range of 50 to 400 $m^2/g$. With such silica (f1), it is easy to support (absorb, adsorb, or retain) the polyorganosiloxane polymer (f2) on the surface of the silica (f1) in accordance with a preferred aspect of the present invention described below. Mined silica is preferably used in combination with at least the same mass of fumed or precipitated silica such that the surface area of the mixture is in the range of 50 to 400 $m^2/g$.

The silica (f1) may be treated with a surface-treating agent. The surface-treating agent may be a low-molecular-weight polyorganosiloxane having a hydroxy or alkoxy end group other than the polyorganosiloxane polymer (f2), hexaorganodisiloxane, or hexaorganodisilazane described below. Among these, polydimethylsiloxane that is an oligomer having an average degree of polymerization in the range of 2 to 100, has a hydroxy end group, and is liquid or viscous oil at normal temperature is particularly preferred.

The polyorganosiloxane polymer (f2) in the present invention functions to impart significant flame resistance to the polycarbonate resin composition by the synergistic effect with the silica (f1). The organic group of the polyorganosiloxane polymer (f2) is selected from hydrocarbon and halogenated hydrocarbon groups, such as alkyl and substituted alkyl groups each having 1 to 20 carbon atoms, alkenyl groups, such as vinyl and 5-hexenyl, cycloalkyl groups, such as cyclohexyl, and aromatic hydrocarbon groups, such as phenyl, benzyl, and tolyl. Lower alkyl groups having 1 to 4 carbon atoms, a phenyl group, and halogen-substituted alkyls, such as 3,3,3-trifluoropropyl, are preferred. The polyorganosiloxane polymer (f2) may be linear or have a branched group and is more preferably a linear polydimethylsiloxane having no branched group.

The polyorganosiloxane polymer (f2) may be a polyorganosiloxane polymer (f21) having no functional group in its molecular chain or a polyorganosiloxane polymer (f22) having a functional group in its molecular chain. In the case of the polyorganosiloxane polymer (f22) having a functional group, the functional group is preferably a methacryl group or an epoxy group. The presence of a methacryl group or an epoxy group allows a cross-linking reaction with an (A) resin component to occur during combustion, thus further improving the flame resistance of the resin composition.

The amount of functional group in the molecular chain of the polyorganosiloxane polymer (f22) having a functional group is generally in the range of approximately 0.01% to 1% by mole, preferably 0.03% to 0.5% by mole, particularly preferably 0.05% to 0.3% by mole.

The silicone powder may be any of the following (1) to (3) :

(1) a silicone powder containing the polyorganosiloxane polymer (f21) having no functional group supported on the surface of the silica (f1),
(2) a silicone powder containing the polyorganosiloxane (f22) having a functional group of a methacryl group or an epoxy group supported on the surface of the silica (f1), and
(3) a mixture of (1) and (2).

The percentages of the silica (f1) and the polyorganosiloxane polymer (f2) in the silicone powder are preferably selected from the ranges of 10% to 90% by mass for the silica (f1) and 90% to 10% by mass for the polyorganosiloxane polymer (f2). When the amount of silica (f1) constituting the silicone powder is less than 10% by mass, it is difficult to support the polyorganosiloxane polymer (f2) and produce a free-flowing powder. When the amount of silica (f1) is more than 90% by mass, this results in an excessively small amount of polyorganosiloxane polymer (f2) and tends to cause a poor appearance of a formed product. More preferred percentages are in the range of 20% to 80% by mass for the silica (f1) and 80% to 20% by mass for the polyorganosiloxane polymer (f2).

When a high-thermal-conductivity polycarbonate resin composition according to the present invention contains an (F) silicone flame retardant as a flame retardant, the amount of (F) silicone flame retardant is in the range of 0.1 to 10 parts by mass per 100 parts by mass of (A) resin component. When the amount of (F) silicone flame retardant is less than 0.1 parts by mass per 100 parts by mass of the (A) resin component, a formed product of the resin composition tends to have insufficient flame resistance, mechanical strength, or heat resistance. When the amount of (F) silicone flame retardant is more than 10 parts by mass, the resin composition tends to have insufficient impact resistance or flowability. The amount of (F) silicone flame retardant is more preferably in the range of 0.2 to 8 parts by mass, still more preferably 0.3 to 5 parts by mass, still more preferably 0.3 to 3 parts by mass, particularly preferably 0.5 to 2 parts by mass, per 100 parts by mass of the (A) resin component.

When a silicone powder containing the polyorganosiloxane polymer (f2) supported on the surface of the silica (f1) is used as the (F) silicone flame retardant, the amount of silica (f1) in a high-thermal-conductivity polycarbonate resin composition according to the present invention is preferably in the range of 0.01 to 9 parts by mass per 100 parts by mass of the (A) resin component. When the amount of silica (f1) is less than 0.01 parts by mass per 100 parts by mass of the (A) resin component, a formed product of the resin composition has insufficient flame resistance, mechanical strength, or heat resistance. When the amount of silica (f1) is more than 9 parts by mass, the resin composition has insufficient impact resistance or flowability. The amount of silica (f1) is more preferably in the range of 0.02 to 7.2 parts

by mass, still more preferably 0.03 to 4.5 parts by mass, particularly preferably 0.05 to 1.8 parts by mass, per 100 parts by mass of the resin component. In the case that the silica (f1) is surface-treated with a surface-treating agent, the mass of silica (f1) includes the mass of the surface-treating agent.

The amount of polyorganosiloxane polymer (f2) is preferably in the range of 0.01 to 9 parts by mass per 100 parts by mass of the (A) resin component. When the amount of polyorganosiloxane polymer (f2) is less than 0.01 parts by mass per 100 parts by mass of the (A) resin component, a formed product of the resin composition has insufficient flame resistance, mechanical strength, or heat resistance. When the amount of polyorganosiloxane polymer (f2) is more than 9 parts by mass, the resin composition has insufficient impact resistance or flowability. The amount of polyorganosiloxane polymer (f2) is more preferably in the range of 0.02 to 7.2 parts by mass, still more preferably 0.03 to 4.5 parts by mass, particularly preferably 0.05 to 1.8 parts by mass, per 100 parts by mass of the resin component.

<(G) Metal Salt Flame Retardant>

The (G) metal salt flame retardant is preferably an organic sulfonic acid metal salt. The (G) metal salt flame retardant, such as an organic sulfonic acid metal salt, can promote the formation of a carbonized layer during the combustion of the resin composition, thereby improving flame resistance, and can maintain excellent mechanical properties, such as impact resistance, heat resistance, and electrical characteristics of the polycarbonate resin.

Examples of the metal of the organic sulfonic acid metal salt include alkali metals, such as lithium (Li), sodium (Na), potassium (K), rubidium (Rb), and cesium (Cs); alkaline-earth metals, such as magnesium (Mg), calcium (Ca), strontium (Sr), and barium (Ba); and aluminum (Al), titanium (Ti), iron (Fe), cobalt (Co), nickel (Ni), copper (Cu), zinc (Zn), zirconium (Zr), and molybdenum (Mo). Among these, alkali metals or alkaline-earth metals are preferred. This can promote the formation of a carbonized layer during the combustion of the polycarbonate resin, thereby improving flame resistance, and can maintain excellent mechanical properties, such as impact resistance, heat resistance, and electrical characteristics of the polycarbonate resin.

Among alkali metals or alkaline-earth metals, alkali metals are more preferred, sodium, potassium, cesium, or lithium is still more preferred, sodium, potassium, or cesium is still more preferred, and sodium or potassium is particularly preferred.

Preferred examples of the organic sulfonic acid metal salts include organic sulfonic acid lithium (Li) salts, organic sulfonic acid sodium (Na) salts, organic sulfonic acid potassium (K) salts, organic sulfonic acid rubidium (Rb) salts, organic sulfonic acid cesium (Cs) salts, organic sulfonic acid magnesium (Mg) salts, organic sulfonic acid calcium (Ca) salts, organic sulfonic acid strontium (Sr) salts, and organic sulfonic acid barium (Ba) salts. Among these, organic sulfonic acid alkali metal salts, such as organic sulfonic acid sodium (Na) salts, organic sulfonic acid potassium (K) salts, and organic sulfonic acid cesium (Cs) salts, are particularly preferred.

Preferred examples of the organic sulfonic acid metal salt include fluorine-containing aliphatic sulfonic acid metal salts, fluorine-containing aliphatic sulfonic acid imide metal salts, aromatic sulfonic acid metal salts, and aromatic sulfonamide metal salts.

Among them, preferred specific examples include fluorine-containing aliphatic sulfonic acid metal salts, for example, fluorine-containing aliphatic sulfonic acid alkali metal salts having at least one C-F bond in its molecule, such as potassium nonafluorobutane sulfonate, lithium nonafluorobutane sulfonate, sodium nonafluorobutane sulfonate, cesium nonafluorobutane sulfonate, lithium trifluoromethane sulfonate, sodium trifluoromethane sulfonate, potassium trifluoromethane sulfonate, potassium pentafluoroethane sulfonate, potassium heptafluoropropane sulfonate, and potassium decafluoro-4-(pentafluoroethyl)cyclohexane sulfonate;

fluorine-containing aliphatic sulfonic acid alkaline-earth metal salts having at least one C-F bond in its molecule, such as magnesium nonafluorobutane sulfonate, calcium nonafluorobutane sulfonate, barium nonafluorobutane sulfonate, magnesium trifluoromethane sulfonate, calcium trifluoromethane sulfonate, and barium trifluoromethane sulfonate; and

fluorine-containing aliphatic disulfonic acid alkali metal salts having at least one C-F bond in its molecule, such as disodium difluoromethane disulfonate, dipotassium difluoromethane disulfonate, sodium tetrafluoroethane disulfonate, dipotassium tetrafluoroethane disulfonate, dipotassium hexafluoropropane disulfonate, dipotassium hexafluoroisopropane disulfonate, disodium octafluorobutane disulfonate, and dipotassium octafluorobutane disulfonate; and

fluorine-containing aliphatic sulfonic acid imide metal salts, for example, fluorine-containing aliphatic disulfonic acid imide alkali metal salts having at least one C-F bond in its molecule, such as bis(perfluoropropanesulfonyl)imide lithium, bis(perfluoropropanesulfonyl)imide sodium, bis(perfluoropropanesulfonyl)imide potassium, bis(perfluorobutanesulfonyl)imide lithium, bis(perfluorobutanesulfonyl)imide sodium, bis(perfluorobutanesulfonyl)imide potassium, trifluoromethane(pentafluoroethane)sulfonylimide potassium, trifluoromethane(nonafluorobutane)sulfonylimide sodium, and trifluoromethane(nonafluorobutane)sulfonylimide potassium; and

cyclic fluorine-containing aliphatic sulfonimide alkali metal salts having at least one C-F bond in its molecule, such as cyclo-hexafluoropropane-1,3-bis(sulfonyl)imide lithium, cyclo-hexafluoropropane-1,3-bis(sulfonyl)imide sodium, and cyclo-hexafluoropropane-1,3-bis(sulfonyl)imide potassium; and

aromatic sulfonic acid metal salts, for example, aromatic sulfonic acid alkali metal salts having at least one aromatic group in its molecule, such as dipotassium diphenylsulfone-3,3'-disulfonate, potassium diphenylsulfone-3-sulfonate, sodium benzene sulfonate, sodium (poly)styrene sulfonate, sodium paratoluene sulfonate, sodium (branched) dodecylbenzene sulfonate, sodium trichlorobenzene sulfonate, potassium benzene sulfonate, potassium styrene sulfonate, potassium (poly)styrene sulfonate, potassium paratoluene sulfonate, potassium (branched) dodecylbenzene sulfonate, potassium trichlorobenzene sulfonate, cesium benzene sulfonate, cesium (poly)styrene sulfonate, cesium paratoluene sulfonate, cesium (branched) dodecylbenzene sulfonate, and cesium trichlorobenzene sulfonate; and

aromatic sulfonic acid alkaline-earth metal salts having at least one aromatic group in its molecule, such as magnesium paratoluene sulfonate, calcium paratoluene sulfonate, strontium paratoluene sulfonate, barium paratoluene sulfonate, magnesium (branched) dodecylbenzene sulfonate, and calcium (branched) dodecylbenzene sulfonate; and

aromatic sulfonamide metal salts, for example, aromatic sulfonamide alkali metal salts having at least one aromatic group in its molecule, such as saccharin sodium salt, N-(p-tolylsulfonyl)-p-toluene sulfoimide potassium salt, N-(N'-benzylaminocarbonyl)sulfanylimide potassium salt, and N-(phenylcarboxyl)-sulfanylimide potassium salt.

Among the examples described above, fluorine-containing aliphatic sulfonic acid metal salts are preferred. The fluorine-containing aliphatic sulfonic acid metal salts are more preferably fluorine-containing aliphatic sulfonic acid alkali metal salts having at least one C-F bond in its molecule, particularly preferably perfluoroalkanesulfonic acid alkali metal salts, more specifically potassium nonafluorobutane sulfonate.

The aromatic sulfonic acid metal salts are more preferably aromatic sulfonic acid alkali metal salts, particularly preferably diphenylsulfone-sulfonic acid alkali metal salts, such as diphenylsulfone-3,3'-disulfonic acid dipotassium and diphenylsulfone-3-sulfonic acid potassium; paratoluenesulfonic acid alkali metal salts, such as sodium paratoluene sulfonate, potassium paratoluene sulfonate, and cesium paratoluene sulfonate, still more preferably paratoluenesulfonic acid alkali metal salts.

These metal salt flame retardants may be used alone or in combination at any ratio.

When the (G) metal salt flame retardant is used as a flame retardant, the amount of (G) metal salt flame retardant may be appropriately determined. An excessively small amount of (G) metal salt flame retardant has an insufficient flame retardant effect. On the other hand, an excessively large amount of (G) metal salt flame retardant may result in reduced heat resistance or mechanical properties. Thus, the amount of (G) metal salt flame retardant in the polycarbonate resin composition is generally 0.02 to 0.3 parts by mass, preferably 0.05 to 0.2 parts by mass, per 100 parts by mass of the (A) resin component.

<Anti-Dripping Agent>

A high-thermal-conductivity polycarbonate resin composition according to the present invention may contain an anti-dripping agent so as to prevent dripping during combustion. The anti-dripping agent is preferably an (H) fluoropolymer.

The (H) fluoropolymer refers to a polymer or copolymer having a fluoroethylene structure. Examples of the (H) fluoropolymer include difluoroethylene polymers, tetrafluoroethylene polymers, tetrafluoroethylene-hexafluoropropylene copolymers, and copolymers of tetrafluoroethylene and a fluorine-free ethylene monomer. Polytetrafluoroethylene (PTFE) is preferred. The (H) fluoropolymer preferably has an average molecular weight of 500,000 or more, more preferably in the range of 500,000 to 10,000,000.

Polytetrafluoroethylene for use in the present invention may be of any known type. In particular, polytetrafluoroethylene having fibril forming ability can provide higher melt dripping resistance. Polytetrafluoroethylene (PTFE) having fibril forming ability may be of any type, for example, of type 3 according to ASTM standards. Specific examples include Teflon (registered trademark) 6-J (manufactured by DuPont-Mitsui Fluorochemicals Co., Ltd.), Polyflon D-1, Polyflon F-103, Polyflon F201 (manufactured by Daikin Industries, Ltd.), and CD 076 (manufactured by Asahi-ICI Fluoropolymers Co., Ltd.). Examples of polytetrafluoroethylene other than those of type 3 include Algoflon F5 (manufactured by Montefluos S.p.A.) and Polyflon MPA and Polyflon FA-100 (manufactured by Daikin Industries, Ltd). These polytetrafluoroethylenes (PTFEs) may be used alone or in combination. Such a polytetrafluoroethylene (PTFE) having fibril forming ability can be manufactured by the polymerization of tetrafluoroethylene in an aqueous solvent in the presence of sodium, potassium, or ammonium peroxydisulfide at a pressure in the range of 1 to 100 psi at a temperature in the range of 0°C to 200°C, preferably 20°C to 100°C. Teflon (registered trademark) 30-J or 31-JR (both manufactured by DuPont-Mitsui Fluorochemicals Co., Ltd.) dispersed in a solvent may also be used.

The anti-dripping agent may also be a polytetrafluoroethylene-containing mixed powder composed of polytetrafluoroethylene particles and organic polymer particles. Specific examples of monomers for use in the manufacture of the organic polymer particles include, but are not limited to, styrene monomers, such as styrene, p-methylstyrene, o-methylstyrene, p-chlorostyrene, o-chlorostyrene, p-methoxystyrene, o-methoxystyrene, 2,4-dimethylstyrene, and $\alpha$-methylstyrene, (meth)acrylate monomers, such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl

methacrylate, tridodecyl acrylate, tridodecyl methacrylate, octadecyl acrylate, octadecyl methacrylate, cyclohexyl acrylate, and cyclohexyl methacrylate, vinyl cyanide monomers, such as acrylonitrile and methacrylonitrile, vinyl ether monomers, such as vinyl methyl ether and vinyl ethyl ether, vinyl carboxylate monomers, such as vinyl acetate and vinyl butyrate, olefin monomers, such as ethylene, propylene, and isobutylene, and diene monomers, such as butadiene, isoprene, and dimethylbutadiene. Preferably, two or more polymers or copolymers of these monomers can be used to manufacture organic polymer particles.

The amount of anti-dripping agent, such as (H) fluoropolymer, is preferably in the range of 0.01 to 1 part by mass, more preferably 0.1 to 0.7 parts by mass, per 100 parts by mass of the (A) resin component.

<(I) Mold-Release Agent>

A high-thermal-conductivity polycarbonate resin composition according to the present invention may contain an (I) mold-release agent so as to improve metal mold releasability in a forming process.

The (I) mold-release agent may be an aliphatic carboxylic acid or an alcohol ester thereof, an aliphatic hydrocarbon compound having a number-average molecular weight in the range of 200 to 15000, or a polysiloxane silicone oil.

The aliphatic carboxylic acid may be a saturated or unsaturated, open-chain or cyclic, aliphatic monovalent, divalent, or trivalent carboxylic acid. Among these, a monovalent or divalent carboxylic acid having 6 to 36 carbon atoms, particularly an aliphatic saturated monovalent carboxylic acid having 6 to 36 carbon atoms, is preferred. More specifically, such an aliphatic carboxylic acid may be palmitic acid, stearic acid, caproic acid, capric acid, lauric acid, arachidic acid, behenic acid, lignoceric acid, cerotic acid, melissic acid, tetratriacontanoic acid, montanic acid, adipic acid, or azelaic acid.

The aliphatic carboxylic acid component of the aliphatic carboxylate ester is the same as the aliphatic carboxylic acid described above. The alcohol component of the aliphatic carboxylate ester may be a saturated or unsaturated, open-chain or cyclic, monohydric or polyhydric alcohol. These may have a substituent, such as a fluorine atom or an aryl group. The alcohol component of the aliphatic carboxylate ester is preferably a monohydric or polyhydric saturated alcohol having 30 or less carbon atoms, particularly preferably a saturated aliphatic monohydric or polyhydric alcohol having 30 or less carbon atoms.

Specific examples of the alcohol component include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol. The aliphatic carboxylate ester may contain an aliphatic carboxylic acid and/or an alcohol as an impurity or may be a mixture of aliphatic carboxylate esters.

Specific examples of the aliphatic carboxylate ester include beeswax (a mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.

The aliphatic hydrocarbon having a number-average molecular weight in the range of 200 to 15000 may be liquid paraffin, paraffin wax, microcrystalline wax, polyethylene wax, Fischer-Tropsch wax, or an $\alpha$-olefin oligomer having 3 to 12 carbon atoms. The aliphatic hydrocarbon includes an alicyclic hydrocarbon. The hydrocarbon compound may be partially oxidized.

Among these aliphatic hydrocarbons, paraffin wax, polyethylene wax, or partially oxidized polyethylene wax, particularly paraffin wax or polyethylene wax is preferred. The number-average molecular weight is preferably in the range of 200 to 5000. The aliphatic hydrocarbon may be used alone or in combination at any ratio, provided that the main component is within the range described above.

Examples of the polysiloxane silicone oil include dimethyl silicone oil, phenylmethyl silicone oil, diphenyl silicone oil, and fluorinated alkyl silicone. These may be used alone or in combination at any ratio.

The amount of (I) mold-release agent in a high-thermal-conductivity polycarbonate resin composition according to the present invention may be appropriately determined. An excessively small amount of (I) mold-release agent cannot sufficiently improve mold releasability. On the other hand, an excessively large amount of (I) mold-release agent may result in reduced hydrolysis resistance of the resin or mold fouling in injection molding. The amount of (I) mold-release agent is preferably in the range of 0.001 to 2 parts by mass, particularly 0.01 to 1 part by mass, per 100 parts by mass of the (A) resin component.

<Impact Modifier>

A thermoplastic resin composition according to the present invention may contain an elastomer as an impact modifier so as to improve impact strength.

The elastomer is preferably, but not limited to, a polymer having a multilayer structure. The multilayer structure polymer may be one that contains an alkyl (meth)acrylate polymer. The multilayer structure polymer may be a polymer manufactured by a continuous multistage seed polymerization in which a polymer in an earlier stage is covered with a

polymer in the subsequent stage. The basic polymer structure of the multilayer structure polymer has an inner core layer composed of a cross-linking component having a low glass transition temperature and the outermost core layer composed of a high-molecular compound for improving the adhesion to the matrix of the composition. The component of the innermost core layer of the multilayer structure polymer is a rubber component having a glass transition temperature of 0°C or less. The rubber component may be a rubber component like butadiene, a rubber component like styrene/butadiene, a rubber component of an alkyl (meth)acrylate polymer, a rubber component composed of a polyorganosiloxane polymer and an alkyl (meth)acrylate polymer entangled with each other, or a rubber component composed of a mixture thereof. The component that forms the outermost core layer may be an aromatic vinyl monomer or a non-aromatic monomer, or a copolymer of two or more of them. The aromatic vinyl monomer may be styrene, vinyltoluene, $\alpha$-methylstyrene, monochlorostyrene, dichlorostyrene, or bromostyrene. Among these, styrene is particularly preferred. The non-aromatic monomer may be an alkyl (meth)acrylate, such as ethyl (meth)acrylate or butyl (meth)acrylate, vinyl cyanide, such as acrylonitrile or methacrylonitrile, or vinylidene cyanide. These may be used alone or in combination.

The amount of impact modifier is preferably in the range of 1 to 10 parts by mass, more preferably 2 to 5 parts by mass, per 100 parts by mass of the (A) resin component.

<Others>

In addition to the components described above, if necessary, a high-thermal-conductivity polycarbonate resin composition according to the present invention may contain a required amount of additive agent, for example, stabilizer, such as ultraviolet absorber or antioxidant, pigment, dye, or lubricant.

{Manufacturing Method}

A method for manufacturing a high-thermal-conductivity polycarbonate resin composition is not particularly limited and may be a method for kneading predetermined amounts of the components described above with a kneader, for example, a single- or multi-screw kneader, a Banbury mixer, a roll, or Brabender Plastograph, and solidifying the components by cooling, or a solution blending method in which the components described above were added to an approximate solvent, for example, a hydrocarbon, such as hexane, heptane, benzene, toluene, or xylene, and a derivative thereof and dissolved components or dissolved components and insoluble components are mixed in suspension. Although the melt-kneading method is preferred in terms of industrial cost, the method for manufacturing a high-thermal-conductivity polycarbonate resin composition is not limited to this. In melt-kneading, a single- or twin-screw extruder is preferably used. More preferably, a twin-screw extruder is used.

In the present invention, longer (B) graphitized carbon fiber is preferred to improve thermal conductivity or prevent the warping of a formed product. When such long (B) graphitized carbon fiber is blended with a resin, the blending conditions may be determined such that the long fiber is not broken down into short fibers. Thus, for example, a method for feeding the (B) graphitized carbon fiber in the midstream of an extruder in kneading is preferred. Among others, a method for feeding the (B) graphitized carbon fiber in the midstream of a twin-screw extruder is preferred. Such a method can prevent carbon fiber from being broken and shortened while the composition is kneaded, permitting stable manufacture of the composition.

Alternatively, carbon fiber may be premixed with part of the (A) resin component to which the (B) graphitized carbon fiber is to be added to produce carbon fiber coated with the part of the (A) resin component, or after the preparation of a masterbatch carbon fiber may be added to the remainder of the (A) resin component.

In the case that the (A) resin component contains a resin other than the polycarbonate resin, the part of the (A) resin component may be the resin other than the polycarbonate resin, an alloy of the polycarbonate resin and the resin other than the polycarbonate, or the polycarbonate resin alone. The alloy may have a composition different from the resin composition of interest. When the polycarbonate resin and the other resin are different in the dispersibility of the (B) graphitized carbon fiber, a masterbatch may be prepared with a resin having higher dispersibility for the (B) graphitized carbon fiber.

{Forming Method}

A method for producing a polycarbonate resin formed product using a high-thermal-conductivity polycarbonate resin composition according to the present invention may involve, but is not limited to, a commonly used forming method for thermoplastic resin compositions, for example, injection molding, blow molding, extrusion molding, sheet forming, thermoforming, rotational molding, or laminate molding. In particular, a preferred molding method for a high-thermal-conductivity polycarbonate resin composition according to the present invention may be an injection molding method or an extrusion molding method, in which the (B) graphitized carbon fibers in the composition are oriented by shear force applied to the resin composition in the forming process.

[High-thermal-conductivity polycarbonate Resin Formed Product]

A high-thermal-conductivity polycarbonate resin formed product according to the present invention is manufactured by shaping a high-thermal-conductivity polycarbonate resin composition according to the present invention by an injection molding method or another method.

A high-thermal-conductivity polycarbonate resin formed product according to the present invention can be widely used in office automation (OA) equipment components, electrical and electronic components, and precision apparatus components and is particularly suitable for OA equipment housings and electrical and electronic device housings. A high-thermal-conductivity polycarbonate resin formed product according to the present invention may be applied to heat radiation components for notebook computers, electronic notebooks, mobile phones, personal digital assistants (PDAs), smartphones, digital cameras, projectors, and LED illuminators. Among these, applications in which the high thermal conductivity characteristic of the present invention can be fully utilized include heat radiation components for notebook computer housings and LED illuminators.

EXAMPLES

Although the present invention is further described in the following examples and comparative examples, the present invention is not limited to these examples.

[Components to be Blended]

The components of a polycarbonate resin composition used in the following examples and comparative examples are as follows:

Polycarbonate resin: trade name "Iupilon (registered trademark) S-3000N", manufactured by Mitsubishi Engineering-Plastics Corp., viscosity-average molecular weight: 21,000

Thermoplastic polyester resin (poly(butylene terephthalate) resin): trade name "Novarex (registered trademark) 5008" manufactured by Mitsubishi Engineering-Plastics Corp.

Styrene resin (ABS resin); trade name "Santac (registered trademark) AT-08" manufactured by Nippon A & L Inc.

Graphitized carbon fiber: trade name "Dialead K223HE", manufactured by Mitsubishi Plastics, Inc., average fiber diameter 11 μm, fiber length 6 mm, longitudinal thermal conductivity 600 W/m·K

Glass beads: trade name "EGB731BPN", manufactured by Potters-Ballotini Co., Ltd., average particle size 20 μm, sphericity 1.0

((B)/(C) (average diameter ratio) = 0.55)

Glass flakes: trade name "Glass Flake REFG 101", manufactured by Nippon Sheet Glass Co., Ltd., average particle size 600 μm, aspect ratio 120

Glass fiber: trade name "T-571", manufactured by Nippon Electric Glass Co., Ltd., average fiber diameter 13 μm, fiber length 3 mm

Phosphorus flame retardant: trade name "PX-200" (resorcinol (dixylenyl phosphate)) manufactured by Daihachi Chemical Industry Co., Ltd.

Silicone flame retardant-1: trade name "Torayfil F202", manufactured by Dow Corning Toray Silicone Co., Ltd., a silicone powder manufactured by pulverizing 60% by mass linear polydimethylsiloxane having a viscosity of 60,000 centistokes supported on 40% by mass silica

Silicone flame retardant-2: trade name "DC4-7081", manufactured by Dow Corning Toray Silicone Co., Ltd., a silicone powder manufactured by pulverizing 60% by mass polydimethylsiloxane having a methacryl group supported on 40% by mass silica

Metal salt flame retardant: trade name "Bayowet C4" (potassium perfluorobutane sulfonate) manufactured by Lanxess

Fluoropolymer: trade name "Teflon (registered trademark) 6-J" (polytetrafluoroethylene) manufactured by DuPont-Mitsui Fluorochemicals Co., Ltd.

Mold-release agent: trade name "LICOWAX PE520 POWDER" (polyethylene wax) manufactured by Clariant (Japan)

K.K.

Reference Examples 1, 3, 4 and 8 to 10, Examples 2, 5 to 7 and 11 to 22, Comparative Examples 1 to 11]

Components listed in Tables 1 to 4 were homogeneously mixed in a tumbler mixer. The following extruders were used in the examples. The components were fed to an extruder through a barrel disposed upstream of the extruder and were melt-kneaded under the following conditions to manufacture pellets of the resin composition.

<Extruder and Extrusion Conditions>

Examples 1 to 18 and Comparative Examples 1 to 9 (polycarbonate resin alone)
Extruder: single-screw extruder (Tanabe Plastics Machinery Co., Ltd., VS-40-28, L/D = 28)
Cylinder temperature: 290°C
Screw speed: 60 rpm

Examples 19 and 20 and Comparative Example 10 (an alloy of a polycarbonate resin and a thermoplastic polyester resin)

Extruder: twin-screw extruder (The Japan Steel Works, Ltd., TEX30HSST, L/D = 42)
Cylinder temperature: 280°C
Screw speed: 250 rpm

Examples 21 and 22 and Comparative Example 11 (polycarbonate resin/styrene resin alloy)

Extruder: twin-screw extruder (The Japan Steel Works, Ltd., TEX30HSST, L/D = 42)
Cylinder temperature: 270°C
Screw speed: 250 rpm

The resin composition pellets were used in the following evaluation (1) to (4). Tables 1 to 4 show the results.
In Tables 1 to 4, the symbol "-" in the rows of the evaluation results represents "not measured".

(1) Flowability (MVR)

The resin composition pellets were dried at a temperature of 80°C or 120°C for four hours or more. The MVR (unit: $cm^3$/10 min) of a composition per unit time was measured with a capillary rheometer by a method according to JIS K7210 at 300°C at a load of 1.20 kgf for Examples 1 to 18 and Comparative Examples 1 to 9 and at 260°C at a load of 2.16 kgf for Examples 19 to 22 and Comparative Examples 10 and 11 to determine flowability. The die was 2.095 mm in diameter and 8.0 mm in length. A larger MVR value indicates higher flowability.

(2) Thermal Conductivity

An injection molding machine (SH100, manufactured by Sumitomo Heavy Industries, Ltd., mold clamping force 100 T) was used. A formed product was manufactured by injection molding at a cylinder temperature of 300°C at a mold temperature of 80°C using a metal mold 100 mm in length, 100 mm in width, and 3 mm in thickness at an injection pressure of 147 MPa. Three injection molded products thus manufactured were stacked, and the thermal conductivity was measured with a high-speed thermal conductivity meter (Kemtherm QTM-D3 manufactured by Kyoto Electronics Manufacturing Co., Ltd.) such that the direction of a heating wire of a probe was parallel to the flow direction of the formed product at the top. The value thus measured is hereinafter referred to as $\lambda_X$. Likewise, the thermal conductivity was measured such that the direction of the heating wire of the probe was perpendicular to the flow direction. The value thus measured is hereinafter referred to as $\lambda_Y$. Ten injection molded products thus manufactured were bonded together with dichloromethane and were cut into five pieces at intervals of 20 mm in a direction perpendicular to the flow direction. The cut pieces were bonded together with dichloromethane such that all the cross sections could be observed. The bonded cut pieces were smoothly finished with a belt sander. The heating wire of the probe was held against the finished

surface to measure thermal conductivity. The value thus measured is hereinafter referred to as $\lambda_Z$. $\lambda_M$ and $\lambda_T$ are calculated from the three measured values in accordance with the following equations with reference to a calculation method based on the thermal conductivities in the x-, y-, and z-axis directions described in "Netsubusseiti Sokuteiho Sono Shinpo To Kogakuteki Oyo (Method for Measuring Physical Properties: Its Advances and Technological Applications" (edited by Japan Society of Mechanical Engineers, published by Yokendo Co., Ltd.).

$$\lambda_M = \lambda_Y \times \lambda_Z/\lambda_X$$

$$\lambda_T = \lambda_X \times \lambda_Y/\lambda_Z$$

(3) Flame Resistance

The resin composition pellets manufactured were injection-molded into a test specimen having a thickness of 1.58 mm with an injection molding machine J50 manufactured by Japan Steel Works, Ltd. at a resin temperature (the measured temperature of a purged resin) of 290°C, a mold temperature of 90°C, and an injection pressure of 147 MPa.

Five test specimens thus molded were tested in accordance with the test method described in Underwriters Laboratories, Inc., UL-94 "Tests for Flammability of Plastic Materials for Parts in Devices and Appliances" (hereinafter referred to as UL-94). The results were rated V-0, V-1, or V-2 of UL-94 standards. The rates V's of UL-94 are generally as follows:

V-0: the combustion time after test flame application for 10 seconds is 10 seconds or less, the total combustion time of five test specimens is 50 seconds or less, and all the test specimens must not drip flaming particles that ignite the cotton;
V-1: the combustion time after test flame application for 10 seconds is 30 seconds or less, the total combustion time of five test specimens is 250 seconds or less, and all the test specimens must not drip flaming particles that ignite the cotton;
V-2: the combustion time after test flame application for 10 seconds is 30 seconds or less; the total combustion time of five test specimens is 250 seconds or less; and the test specimens can drip flaming particles that ignite the cotton.
NG: the combustion time does not come under any of the combustion times described above, and the test specimens continue burning.

(4) Insulating Properties (Surface Resistivity)

An injection molding machine (SH100, manufactured by Sumitomo Heavy Industries, Ltd., mold clamping force 100 T) was used. A formed product was manufactured by injection molding at a cylinder temperature of 300°C at a mold temperature of 80°C using a metal mold 100 mm in length, 100 mm in width, and 3 mm in thickness at an injection pressure of 147 MPa. The surface resistivity of the injection molded product was measured with ultra high resistance meter R8340 manufactured by Advantest Corp. A higher surface resistivity indicates better insulating properties.

[Table 1]

| | | | *Example 1 | Example 2 | *Example 3 | *Example 4 | Example 5 | Example 6 | Example 7 | *Example 8 | *Example 9 | *Example 10 | Example 11 | Example 12 |
|---|---|---|---|---|---|---|---|---|---|---|---|---|---|---|
| Formulation of polycarbonate resin composition (parts by mass) | Polycarbonate resin (A) | | 100.0 | 100.0 | 100.0 | 100.0 | 100.0 | 100.0 | 100.0 | 100.0 | 100.0 | 100.0 | 100.0 | 100 |
| | Graphitized carbon fiber (B) | | 12.5 | 16.7 | 13.1 | 14.0 | 16.3 | 19.4 | 31.7 | 58.3 | 95.2 | 12.6 | 16.8 | 14.6 |
| | Glass beads (C) | | 12.5 | 50.2 | 6.5 | 14.0 | 32.5 | 58.3 | 158.7 | 19.4 | 95.2 | 12.6 | 50.0 | 29.2 |
| | Glass flakes (D) | | - | - | - | - | - | - | - | - | - | - | - | |
| | Glass fiber | | - | - | - | - | - | - | - | - | - | - | - | |
| | Phosphorus flame retardant | | - | - | 10.5 | 11.2 | 13.0 | 15.5 | 25.4 | 15.5 | 25.4 | - | - | |
| | Metal salt flame retardant | | - | - | - | - | - | - | - | - | - | 0.1 | 0.2 | |
| | Silicone flame retardant-1 | | - | - | - | - | - | - | - | - | - | - | - | 1.7 |
| | Fluoropolymer | | - | - | 0.4 | 0.5 | 0.5 | 0.6 | 1.0 | 0.6 | 1.0 | 0.4 | 0.5 | 0.4 |
| | Mold-release agent | | 0.3 | 0.3 | 0.3 | 0.3 | 0.3 | 0.4 | 0.6 | 0.4 | 0.6 | 0.3 | 0.3 | 0.3 |
| | (B)/(C) (mass ratio) | | 1 | 0.33 | 2 | 1 | 0.5 | 0.33 | 0.2 | 5 | 1 | 1 | 0.33 | 0.5 |
| Evaluation results | Flowability (MVR) | | 10.4 | 9.5 | 11.5 | 10.6 | 8.1 | 6.3 | 3.6 | 5.7 | 3.6 | 11.2 | 9.6 | 9.1 |
| | Thermal conductivity (W/m·K) | $\lambda_M$ | 2.1 | 3.1 | 2.1 | 2.5 | 3.2 | 3.4 | 5.3 | 6.6 | 5.6 | 1.9 | 3.0 | 3.1 |
| | | $\lambda_T$ | 0.7 | 0.8 | 0.5 | 0.3 | 0.5 | 0.4 | 0.5 | 0.6 | 0.7 | 0.7 | 0.7 | 0.7 |
| | Flame retardancy | | - | - | V-0 | V-0 | V-0 | V-0 | - | V-0 | V-0 | V-0 | V-0 | V-0 |
| | Insulating properties (surface resistivity) (Ω/□) | | $1\times10^{14}$ | $1\times10^{8}$ | - | $1\times10^{14}$ | $1\times10^{8}$ | $1\times10^{8}$ | - | - | - | - | - | - |

* Reference Example

[Table 2]

| | | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|
| Formulation of polycarbonate resin composition (parts by mass) | Polycarbonate resin (A) | | 100.0 | 100.0 | 100.0 | 100.0 | 100.0 | 100.0 | 100.0 | 100.0 | 100.0 |
| | Graphitized carbon fiber (B) | | 11.1 | 12.3 | 48.8 | 14.0 | 16.3 | 19.4 | 14.0 | 16.3 | 19.4 |
| | Glass beads (C) | | - | - | - | - | - | - | - | - | - |
| | Glass flakes (D) | | - | - | - | 14.0 | 32.5 | 58.3 | - | - | - |
| | Glass fiber | | - | - | - | - | - | - | 14.0 | 32.5 | 58.3 |
| | Phosphorus flame retardant | | - | 9.8 | 13.0 | 11.2 | 13.0 | 15.5 | 11.2 | 13.0 | 15.5 |
| | Metal salt flame retardant | | - | - | - | - | - | - | - | - | - |
| | Silicone flame retardant-1 | | - | - | - | - | - | - | - | - | - |
| | Fluoropolymer | | - | 0.4 | 0.5 | 0.4 | 0.5 | 0.6 | 0.4 | 0.5 | 0.6 |
| | Mold-release agent | | 0.2 | 0.2 | 0.3 | 0.3 | 0.3 | 0.4 | 0.3 | 0.3 | 0.4 |
| Evaluation results | Flowability (MVR) | | 10.8 | 15.0 | 5.1 | 8.7 | 6.9 | 6.1 | 11.2 | 9.0 | 5.7 |
| | Thermal conductivity (W/m·K) | $\lambda_M$ | 1.3 | 2.0 | 4.9 | 2.2 | 2.4 | 2.0 | 2.2 | 1.7 | 1.4 |
| | | $\lambda_T$ | 0.2 | 0.2 | 0.7 | 0.2 | 0.3 | 0.3 | 0.3 | 0.3 | 0.3 |
| | Flame retardancy | | - | V-0 | V-0 | V-0 | V-0 | V-0 | V-0 | V-0 | V-0 |
| | Insulating properties (surface resistivity) (Ω/□) | | - | - | - | - | - | - | - | - | - |

[Table 3]

| | | Example 13 | Example 14 | Example 15 | Example 16 | Example 17 | Example 18 |
|---|---|---|---|---|---|---|---|
| Formulation of polycarbonate resin composition (parts by mass) | Polycarbonate resin (A) | 100.0 | 100.0 | 100.0 | 100.0 | 100.0 | 100.0 |
| | Graphitized carbon fiber (B) | 16.7 | 17.7 | 19.4 | 17.1 | 17.1 | 16.7 |
| | Glass beads (C) | 33.4 | 35.4 | 38.8 | 34.2 | 34.2 | 33.4 |
| | Glass flakes (D) | 16.7 | 8.8 | 19.4 | 17.1 | 17.1 | 16.7 |
| | Glass fiber | – | – | – | – | – | |
| | Phosphorus flame retardant | – | 14.2 | 15.5 | – | – | |
| | Silicone flame retardant-1 | – | – | – | 1.7 | – | |
| | Silicone flame retardant-2 | – | – | – | – | 1.7 | |
| | Metal salt flame retardant | | | | | | 0.2 |
| | Fluoropolymer | – | 0.5 | 0.6 | 0.5 | 0.5 | 0.5 |
| | Mold-release agent | 0.3 | 0.4 | 0.4 | 0.3 | 0.3 | 0.3 |
| | (B)/(C) (mass ratio) | 0.5 | 0.5 | 0.5 | 0.5 | 0.5 | 0.5 |
| | (D)/(C) (mass ratio) | 0.5 | 0.25 | 0.5 | 0.5 | 0.5 | 0.5 |
| Evaluation results | Flowability (MVR) | 7.5 | 9.7 | 8.9 | 6.8 | 6.8 | 7.1 |
| | Thermal conductivity $\lambda_M$ (W/m·K) | 3.0 | 3.3 | 3.1 | 3.0 | 3.0 | 3.0 |
| | Insulating properties (surface resistivity) (Ω/□) | $1\times10^{14}$ | $1\times10^{14}$ | $1\times10^{14}$ | $1\times10^{14}$ | $1\times10^{14}$ | $1\times10^{14}$ |
| | Flame retardancy | — | V-0 | V-0 | V-0 | V-0 | V-0 |

[Table 4]

| | | Comparative example 10 | Example 19 | Example 20 | Comparative example 11 | Example 21 | Example 22 |
|---|---|---|---|---|---|---|---|
| Formulation of polycarbonate resin composition (parts by mass) | Polycarbonate resin (A) | 100.0 | 100.0 | 100.0 | 100.0 | 100.0 | 100.0 |
| | Thermoplastic polyester resin | 42.9 | 25.0 | 25.0 | - | - | - |
| | Styrene resin | - | - | - | 42.9 | 25.0 | 25.0 |
| | Graphitized carbon fiber (B) | 17.5 | 20.3 | 24.3 | 17.5 | 20.3 | 24.3 |
| | Glass beads (C) | - | 40.7 | 48.5 | - | 40.7 | 48.5 |
| | Glass flakes (D) | - | - | 24.3 | - | - | 24.3 |
| | Glass fiber | - | - | - | - | - | - |
| | Phosphorus flame retardant | 14.0 | 16.3 | 19.4 | 14.0 | 16.3 | 19.4 |
| | Silicone flame retardant-1 | - | - | - | - | - | - |
| | Silicone flame retardant-2 | - | - | - | - | - | - |
| | Metal salt flame retardant | - | - | - | - | - | - |
| | Fluoropolymer | 0.5 | 0.6 | 0.7 | 0.5 | 0.6 | 0.7 |
| | Mold-release agent | 0.4 | 0.4 | 0.5 | 0.4 | 0.4 | 0.5 |
| | (B)/(C) (mass ratio) | - | 0.5 | 0.5 | - | 0.5 | 0.5 |
| | (D)/(C) (mass ratio) | - | - | 0.5 | - | - | 0.5 |
| Evaluation results | Flowability (MVR) | 23.9 | 13.6 | 11.4 | 14.0 | 9.6 | 9.3 |
| | Thermal conductivity $\lambda_M$ (W/m·K) | 1.7 | 2.1 | 3.2 | 1.4 | 1.8 | 2.2 |
| | Insulating properties (surface resistivity) (Ω/□) | - | $1\times10^8$ | $1\times10^{15}$ | - | $1\times10^8$ | $1\times10^{15}$ |
| | Flame retardancy | V-0 | V-0 | V-0 | V-1 | V-1 | V-1 |

Tables 1 to 4 show the following.

Use of glass beads having high sphericity in combination with graphitized carbon fiber can further improve thermal conductivity.

More specifically, comparison of Comparative Example 1 containing no glass beads with Reference Example 1 and Example 2 containing glass beads shows that Reference Example 1 and Example 2 containing glass beads and substantially the same amount of graphitized carbon fiber as Comparative Example 1 clearly had higher thermal conductivity. Comparison of Comparative Examples 10 and 11 containing no glass beads with Examples 19 and 21 containing glass beads shows substantially the same results.

In the presence of a flame retardant, comparison of Comparative Example 2 with Reference Examples 3 and 4 and Examples 5 to 7 and comparison of Comparative Example 3 with Reference Examples 8 and 9 also show that Examples containing glass beads and substantially the same amount of graphitized carbon fiber as Comparative Examples clearly had higher thermal conductivity.

Comparison of Examples 3 to 6 with Comparative Examples 4 to 9 shows that the addition of glass flakes or glass fiber in place of the glass beads does not effectively improve thermal conductivity.

Comparison of Examples 10 and 11, each of which contains a metal salt flame retardant instead of a phosphorus flame retardant, and Example 12, which contains a silicone flame retardant instead of a phosphorus flame retardant, with Reference Example 4 and Example 6 shows that the phosphorus flame retardant has greater flowability improving effects than the metal salt flame retardant or the silicone flame retardant. This can prevent the carbon fiber to be broken while the composition is kneaded, allowing a network having high thermal conductivity to be formed and effectively improving thermal conductivity.

As shown in Examples 13 to 18, 20, and 22, use of glass flakes having a particular aspect ratio in combination with graphitized carbon fiber and glass beads having high sphericity can further improve insulating properties while maintaining high thermal conductivity.

In comparison of insulating properties and thermal conductivity, Reference Examples 1 and 4 having no glass flakes had good insulating properties (high surface resistivity) but lower thermal conductivities than Examples 13 to 18, 20, and 22. Examples 2, 5, 6, 19, and 21 had substantially the same thermal conductivity as Examples 13 to 18, 20, and 22 but were inferior in insulating properties (surface resistivity) to Examples 13 to 18, 20, and 22.

Although the present invention has been described in detail with reference to particular embodiments, it is apparent to a person skilled in the art that various modifications can be made without departing from the scope of the present invention.

## Claims

1. A high-thermal-conductivity polycarbonate resin composition, comprising:

    100 parts by mass of an (A) resin component mainly composed of a polycarbonate resin;
    5 parts by mass or more and 100 parts by mass or less of (B) graphitized carbon fiber having a longitudinal thermal conductivity of 100 W/m K or more and an average fiber diameter in the range of 5 to 20 μm; and
    5 parts by mass or more and 200 parts by mass or less of (C) glass beads having an average particle size in the range of 1 to 100 μm and a sphericity in the range of 1 to 2,
    wherein the graphitized carbon fiber is a short carbon fiber aggregate manufactured by aggregating short carbon fibers having a length of 2 to 20 mm at a bulk density in the range of 450 to 800 g/l with a sizing agent, cutting the aggregate to a predetermined length, and then graphitizing the aggregate by heating the aggregate in an inert gas atmosphere at a temperature in the range of 2800°C to 3300°C, while the sizing agent content is 0.1% by mass or less,
    wherein the amount of (B) graphitized carbon fiber relative to the amount of (C) glass beads ((B)/(C) (mass ratio)) is 0.1 or more and less than 1, and
    wherein the sphericity of the glass beads is determined by calculating the ratio of the average maximum particle size/the average minimum particle size, wherein the average maximum particle size is a mean value obtained by measuring the maximum particle sizes of 100 samples in scanning electron microscope (SEM) observation, and the average minimum particle size is a mean value obtained by measuring the minimum particle sizes of 100 samples in scanning electron microscope (SEM) observation, the maximum particle size being a diameter at a portion having the largest distance between two parallel plates when the glass beads are placed between two parallel plates, and the minimum particle size being a diameter at a portion having the smallest interval between two parallel plates when the glass beads are placed between two parallel plates.

2. The high-thermal-conductivity polycarbonate resin composition according to Claim 1, wherein the (A) resin component is a polycarbonate resin alone.

3. The high-thermal-conductivity polycarbonate resin composition according to Claim 1, wherein the (A) resin component is an alloy of a polycarbonate resin and a thermoplastic polyester resin or an alloy of a polycarbonate resin and a styrene resin.

4. The high-thermal-conductivity polycarbonate resin composition according to any one of Claims 1 to 3, wherein the amount of the (B) graphitized carbon fiber is 15 parts by mass or more and 35 parts by mass or less per 100 parts by mass of the (A) resin component.

5. The high-thermal-conductivity polycarbonate resin composition according to any one of Claims 1 to 4, further comprising 5 parts by mass or more and 30 parts by mass or less of an (E) phosphorus flame retardant per 100 parts

by mass of the (A) resin component.

6. The high-thermal-conductivity polycarbonate resin composition according to Claim 5, wherein the (E) phosphorus flame retardant is a phosphate compound.

7. The high-thermal-conductivity polycarbonate resin composition according to any one of Claims 1 to 4, further comprising 0.1 parts by mass or more and 10 parts by mass or less of an (F) silicone flame retardant per 100 parts by mass of the (A) resin component.

8. The high-thermal-conductivity polycarbonate resin composition according to any one of Claims 1 to 4, further comprising 0.02 parts by mass or more and 0.3 parts by mass or less of a (G) metal salt flame retardant per 100 parts by mass of the (A) resin component.

9. The high-thermal-conductivity polycarbonate resin composition according to any one of Claims 1 to 8, further comprising 0.01 parts by mass or more and 1 part by mass or less of a (H) fluoropolymer per 100 parts by mass of the (A) resin component.

10. The high-thermal-conductivity polycarbonate resin composition according to any one of Claims 1 to 9, further comprising 0.001 parts by mass or more and 2 parts by mass or less of a (I) mold-release agent per 100 parts by mass of the (A) resin component.

11. The high-thermal-conductivity polycarbonate resin composition according to Claim 1, wherein the amount of the (B) graphitized carbon fiber is 10 parts by mass or more and 40 parts by mass or less per 100 parts by mass of the (A) resin component.

12. A high-thermal-conductivity polycarbonate resin formed product, manufactured by shaping a high-thermal-conductivity polycarbonate resin composition according to any one of Claims 1 to 11.

## Patentansprüche

1. Polycarbonatharzzusammensetzung mit hoher Wärmeleitfähigkeit, umfassend:

100 Masseteile einer (A) Harzkomponente, die hauptsächlich aus einem Polycarbonatharz zusammengesetzt ist,
5 Masseteile oder mehr und 100 Masseteile oder weniger (B) graphitisierte Kohlenstofffaser mit einer Wärmeleitfähigkeit in Längsrichtung von 100 W/m K oder mehr und einem durchschnittlichen Faserdurchmesser im Bereich von 5 bis 20 μm und
5 Masseteile oder mehr und 20 Masseteile oder weniger (C) Glasperlen mit einer durchschnittlichen Partikelgröße innerhalb eines Bereichs von 1 bis 100 μm und einer Kugelförmigkeit innerhalb eines Bereichs von 1 bis 2,
wobei die graphitisierte Kohlenstofffaser ein Kohlenstoffkurzfaseraggregat ist, das durch Aggregieren von Kohlenstoffkurzfasern mit einer Länge von 2 bis 20 nm bei einer Schüttdichte innerhalb eines Bereichs von 450 bis 800 g/l mit einem Schlichtemittel, Schneiden des Aggregats auf eine vorbestimmte Länge und dann Graphitisieren des Aggregats durch Erwärmen des Aggregats in einer Inertgasatmosphäre bei einer Temperatur innerhalb eines Bereichs von 2.800°C bis 3.300°C, während der Schlichtemittelgehalt 0,1 Masse-% oder weniger beträgt, hergestellt wird,
wobei die Menge der (B) graphitisierten Kohlenstofffaser, bezogen auf die Menge der (C) Glasperlen ((B)/(C) (Masseverhältnis)) 0,1 oder mehr und weniger als 1 beträgt und
wobei die Kugelförmigkeit der Glasperlen durch Berechnung des Verhältnisses durchschnittliche maximale Partikelgröße/durchschnittliche minimale Partikelgröße bestimmt wird, wobei die durchschnittliche maximale Partikelgröße ein Mittelwert ist, der durch Messen der maximalen Partikelgrößen von 100 Proben in einer Rasterelektronenmikroskop (REM)-Untersuchung erhalten wird, und die durchschnittliche minimale Partikelgröße ein Mittelwert ist, der durch Messen der minimalen Partikelgrößen von 100 Proben in einer Rasterelektronenmikroskop (REM)-Untersuchung erhalten wird, wobei die maximale Partikelgröße ein Durchmesser in einem Abschnitt mit dem größten Abstand zwischen zwei parallelen Platten ist, wenn die Glasperlen zwischen zwei parallelen Platten platziert werden, und die minimale Partikelgröße ein Durchmesser in einem Abschnitt mit dem kleinsten Zwischenraum zwischen zwei parallelen Platten ist, wenn die Glasperlen zwischen zwei parallele Platten platziert werden.

2. Polycarbonatharzzusammensetzung mit hoher Wärmeleitfähigkeit gemäß Anspruch 1, wobei die (A) Harzkomponente ein Polycarbonatharz allein ist.

3. Polycarbonatharzzusammensetzung mit hoher Wärmeleitfähigkeit gemäß Anspruch 1, wobei die (A) Harzkomponente ein Gemisch aus einem Polycarbonatharz und einem thermoplastischen Polyesterharz oder ein Gemisch aus einem Polycarbonatharz und einem Styrolharz ist.

4. Polycarbonatharzzusammensetzung mit hoher Wärmeleitfähigkeit gemäß irgendeinem der Ansprüche 1 bis 3, wobei die Menge der (B) graphitisierten Kohlenstofffaser 15 Masseteile oder 35 Masseteile oder weniger pro 100 Masseteile der (A) Harzkomponente beträgt.

5. Polycarbonatharzzusammensetzung mit hoher Wärmeleitfähigkeit gemäß irgendeinem der Ansprüche 1 bis 4, ferner umfassend 5 Masseteile oder mehr und 30 Masseteile oder weniger eines (E) Phosphor-Flammschutzmittels pro 100 Masseteile der (A) Harzkomponente.

6. Polycarbonatharzzusammensetzung mit hoher Wärmeleitfähigkeit gemäß Anspruch 5, wobei das (E) Phosphor-Flammschutzmittel eine Phosphatverbindung ist.

7. Polycarbonatharzzusammensetzung mit hoher Wärmeleitfähigkeit gemäß irgendeinem der Ansprüche 1 bis 4, ferner umfassend 0,1 Masseteile oder mehr und 10 Masseteile oder weniger eines (F) Silikon-Flammschutzmittels pro 100 Masseteile der (A) Harzkomponente.

8. Polycarbonatharzzusammensetzung mit hoher Wärmeleitfähigkeit gemäß irgendeinem der Ansprüche 1 bis 4, ferner umfassend 0,02 Masseteile oder mehr und 0,3 Masseteile oder weniger eines (G) Metallsalz-Flammschutzmittels pro 100 Masseteile der (A) Harzkomponenten.

9. Polycarbonatharzzusammensetzung mit hoher Wärmeleitfähigkeit gemäß irgendeinem der Ansprüche 1 bis 8, ferner umfassend 0,01 Masseteile oder mehr und 1 Masseteil oder weniger eines (H) Fluorpolymers pro 100 Masse-% der (A) Harzkomponente.

10. Polycarbonatharzzusammensetzung mit hoher Wärmeleitfähigkeit gemäß irgendeinem der Ansprüche 1 bis 9, ferner umfassend 0,001 Masseteile oder mehr und 2 Masseteile oder weniger eines (I) Formtrennmittels pro 100 Masseteile der (A) Harzkomponente.

11. Polycarbonatharzzusammensetzung mit hoher Wärmeleitfähigkeit gemäß Anspruch 1, wobei die Menge der (B) graphitisierten Kohlenstofffaser 10 Masse-% oder mehr und 40 Masse-% oder weniger pro 100 Masseteile der (A) Harzkomponente beträgt.

12. Polycarbonatharzformprodukt mit hoher Wärmeleitfähigkeit, hergestellt durch Formen einer Polycarbonatharzzusammensetzung mit hoher Wärmeleitfähigkeit gemäß irgendeinem der Ansprüche 1 bis 11.

## Revendications

1. Composition de résine polycarbonate à conductivité thermique élevée, comprenant :

   100 parties en masse d'un composant de résine (A) principalement constitué d'une résine polycarbonate ;
   5 parties en masse ou plus et 100 parties en masse ou moins d'une fibre de carbone graphitisée (B) ayant une conductivité thermique longitudinale de 100 W/m·K ou plus, et un diamètre de fibre moyen dans la plage allant de 5 à 20 μm ; et
   5 parties en masse ou plus et 200 parties en masse ou moins de billes de verre (C) ayant une taille moyenne de particules dans la plage allant de 1 à 100 μm et une sphéricité située dans la plage allant de 1 à 2,
   dans laquelle la fibre de carbone graphitisée est un agrégat de fibres de carbone courtes fabriqué en agrégeant des fibres de carbone courtes ayant une longueur de 2 à 20 mm à une densité volumique se situant dans la plage allant de 450 à 800 g/l avec un agent de collage, en coupant l'agrégat à une longueur prédéterminée, et en graphitisant ensuite l'agrégat en chauffant l'agrégat dans une atmosphère de gaz inerte à une température située dans la plage allant de 2 800 °C et 3 300 °C, alors que la teneur en agent de collage est inférieure ou égale à 0,1 % en masse,

dans laquelle la quantité de fibre de carbone graphitisée (B) par rapport à la quantité de billes de verre (C) ((B)/(C) (rapport massique)) est supérieure ou égale à 0,1 et inférieure à 1, et
dans laquelle la sphéricité des billes de verre est déterminée en calculant le rapport de la taille moyenne maximale de particules/la taille moyenne minimale de particules, dans laquelle la taille moyenne maximale de particules est une valeur moyenne obtenue en mesurant les tailles maximales de particules de 100 échantillons lors d'une observation par microscope électronique à balayage (SEM), et
la taille moyenne minimale de particules est une valeur moyenne obtenue en mesurant les tailles minimales de particules de 100 échantillons lors d'une observation par microscope électronique à balayage (SEM), la taille maximale de particules étant un diamètre au niveau d'une partie ayant la plus grande distance entre deux plaques parallèles lorsque les billes de verre sont placées entre deux plaques parallèles, et la taille minimale de particules étant un diamètre au niveau d'une partie ayant le plus petit intervalle entre deux plaques parallèles lorsque les billes de verre sont placées entre deux plaques parallèles.

**2.** Composition de résine polycarbonate à conductivité thermique élevée selon la revendication 1, dans laquelle le composant de résine (A) est une résine polycarbonate seule.

**3.** Composition de résine polycarbonate à conductivité thermique élevée selon la revendication 1, dans laquelle le composant de résine (A) est un alliage d'une résine polycarbonate et d'une résine polyester thermoplastique ou d'un alliage d'une résine polycarbonate et d'une résine styrène.

**4.** Composition de résine polycarbonate à conductivité thermique élevée selon l'une quelconque des revendications 1 à 3, dans laquelle la quantité de la fibre de carbone graphitisée (B) est supérieure ou égale à 15 parties en masse et inférieure ou égale à 35 parties en masse pour 100 parties en masse du composant de résine (A).

**5.** Composition de résine polycarbonate à conductivité thermique élevée selon l'une quelconque des revendications 1 à 4, comprenant en outre 5 parties en masse ou plus et 30 parties en masse ou moins d'un agent ignifuge au phosphore (E) pour 100 parties en masse du composant de résine (A).

**6.** Composition de résine polycarbonate à conductivité thermique élevée selon la revendication 5, dans laquelle l'agent ignifuge au phosphore (E) est un composé phosphate.

**7.** Composition de résine polycarbonate à conductivité thermique élevée selon l'une quelconque des revendications 1 à 4, comprenant en outre 0,1 partie en masse ou plus et 10 parties en masse ou moins d'un agent ignifuge au silicone (F) pour 100 parties en masse du composant de résine (A).

**8.** Composition de résine polycarbonate à conductivité thermique élevée selon l'une quelconque des revendications 1 à 4, comprenant en outre 0,02 partie en masse ou plus et 0,3 partie en masse ou moins d'un agent ignifuge à sel métallique (G) pour 100 parties en masse du composant de résine (A).

**9.** Composition de résine polycarbonate à conductivité thermique élevée selon l'une quelconque des revendications 1 à 8, comprenant en outre 0,01 partie en masse ou plus et 1 partie en masse ou moins d'un fluoropolymère (H) pour 100 parties en masse du composant de résine (A).

**10.** Composition de résine polycarbonate à conductivité thermique élevée selon l'une quelconque des revendications 1 à 9, comprenant en outre 0,001 partie en masse ou plus et 2 parties en masse ou moins d'un agent de démoulage (I) pour 100 parties en masse du composant de résine (A).

**11.** Composition de résine polycarbonate à conductivité thermique élevée selon la revendication 1, dans laquelle la quantité de fibre de carbone graphitisée (B) est de 10 parties en masse ou plus et 40 parties en masse ou moins pour 100 parties en masse du composant de résine (A).

**12.** Produit formé en résine polycarbonate à conductivité thermique élevée, fabriqué par mise en forme d'une composition de résine polycarbonate à conductivité thermique élevée selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005320515 A
- US 4243575 A
- JP 2000143826 A

### Non-patent literature cited in the description

- Netsubusseiti Sokuteiho Sono Shinpo To Kogakuteki Oyo (Method for Measuring Physical Properties: Its Advances and Technological Applications. Yokendo Co., Ltd,